# EUROPEAN PATENT APPLICATION

(11) **EP 1 499 064 A1**
(43) Date of publication of application: **19.01.2005**
(21) Application number: 03291756.9
(22) Date of filing: 16.07.2003
(51) Int. Cl.: H04L 12/18, H04L 12/56

(54) **Combining point-to-point information and point-to-multipoint information in a radio network controller**

(71) Applicant: ALCATEL, 75008 Paris (FR)
(72) Inventor: Gomez Vinagre, Ignacio, 2000 Antwerp (BE)
(74) Representative: Plas, Axel

(57) **Abstract**

Methods, for transmitting point-to-point information (75) from radio network controllers (51) to terminals (50) having point-to-point-modes for receiving point-to-point information and point-to-multipoint modes for receiving point-to-multipoint information in Universal Mobile Telecommunication Systems, provide terminal messages (58,59) with mode-indications for informing radio network controllers (51) that terminals (50) are in non-signalling point-to-multipoint modes, establish a dedicated signalling connection, and send combined information (74) comprising point-to-multipoint information (76) and point-to-point information (75) to the terminals in the point-to-point-mode, to allow single-coded terminals to receive both kinds of information simultaneously. The terminal messages comprise identifiers for identifying the point-to-multipoint information and the non-signalling point-to-multipoint mode corresponds with an idle mode for receiving the point-to-multipoint information via a common channel without dedicated signalling taking place. The point-to-point-mode usually corresponds with a non-idle mode for receiving point-to-point information (75) or combined information (74) under signalling conditions.

## Description

The invention relates to a method for transmitting point-to-point information from a radio network controller to a terminal, which terminal comprises a point-to-point-mode for receiving the point-to-point information from the radio network controller and a point-to-multipoint mode for receiving point-to-multipoint information from the radio network controller, which method comprises the steps of
- transmitting a terminal message from the terminal to the radio network controller; and
- transmitting a controller message from the radio network controller to the terminal for bringing the terminal in the point-to-point-mode.

The terminal for example corresponds with a Universal Mobile Telecommunication Service End Terminal. The radio network controller for example corresponds with a (part of a) Universal Mobile Telecommunication Service Terrestrial Radio Access Network. The point-to-point information for example forms part of a call, and the point-to-multipoint information for example forms part of a Multimedia Broadcast Multicast Service.

The point-to-point-mode and the point-to-multipoint mode are for example defined by the codes used for the exchange of point-to-point information and point-to-multipoint information, like for example the codes used in Code Division Multiple Access Systems etc. In the point-to-point-mode, point-to-point information is sent to a single user via a dedicated channel. In the point-to-multipoint mode, the same point-to-multipoint information is sent to several users at the same time via common channels. The terminal message is generated by the terminal in response to a controller paging message originating from the radio network controller. A terminal in a signalling point-to-multipoint-mode is in a connected mode, which entails the existence of a dedicated signalling connection with the radio network controller, and a terminal in a non-signalling point-to-multipoint-mode is in an idle mode, which entails that there is no signalling connection with the radio network controller. The radio network controller is always aware of whether the terminal is in a connected mode (in case the terminal is not in a connected mode, it must be in an idle mode) but it may not be aware of whether the terminal is in a non-signalling point-to-multipoint-mode (in other words it may not be aware of whether the terminal is receiving data in the idle mode). According to prior art, two kinds of terminals exist. Firstly there are multi-coded terminals which can receive point-to-point information and point-to-multipoint information simultaneously, in other words which can be in the point-to-point-mode and the point-to-multipoint simultaneously. Secondly there are single-coded terminals which can only receive one kind of information at a time, and which can only be in one mode at a time.

The known method is disadvantageous, inter alia, due to single-coded terminals not being able to demodulate a dedicated channel carrying point-to-point information and a common channel carrying point-to-multipoint information simultaneously. While receiving point-to-multipoint information, the reception of point-to-point information can only be made possible by interrupting (or finishing) the reception of the point-to-multipoint information.

It is an object of the invention, inter alia, of providing a method as defined above which allows single-coded terminals to receive point-to-point information during and without interrupting (or finishing) a reception of point-to-multipoint information.

The method according to the invention is characterised in that at least one terminal message comprises a mode-indication for informing the radio network controller that the terminal is in a non-signalling point-to-multipoint-mode, with the method further comprising the steps of
- establishing a dedicated signalling connection between the radio network controller and the terminal; and
- combining the point-to-multipoint information and the point-to-point information and sending the combined information to the terminal in the point-to-point-mode.

Usually the radio network controller is not aware that the terminal is receiving point-to-multipoint information in the idle mode. By letting the terminal generate the mode-indication to be inserted into the at least one terminal message for informing the radio network controller that the terminal is in the non-signalling point-to-multipoint-mode, the radio network controller is informed that the terminal is receiving data in the idle-mode. A dedicated signalling connection is established between the radio network controller and the terminal on a common channel. By then bringing the terminal in the point-to-point-mode via the controller message, and by letting the radio network controller combine the point-to-multipoint information and the point-to-point information into the combined information to be transmitted to the terminal in the point-to-point-mode, even single-coded terminals can now receive both kinds of information simultaneously, without being required to be in both modes simultaneously. This is an advantage, due to multi-coded terminals being more expensive than single-coded terminals.

The invention is however not limited to single-coded terminals and can be used for multi-coded terminals as well, for example to, during a reception of combined information comprising the point-to-multipoint information and the point-to-point information in the point-to-point-mode, allow a reception of further point-to-multipoint information in the point-to-multipoint mode.

A first embodiment of the method according to the invention is defined by claim 2.

The at least one terminal message comprises an identifier for identifying the point-to-multipoint information, to advantageously allow a distinguishment between several kinds of point-to-multipoint information.

A second embodiment of the method according to the invention is defined by claim 3.

The common channel is a channel which does not require to be set up, the dedicated channel is a channel which requires to be set up, and the one and the same channel can be a common channel like a forward or random access channel or can be a dedicated channel. Usually, a Universal Mobile Telecommunication Network comprises many common channels and offers the possibility of setting up many dedicated channels.

A third embodiment of the method according to the invention is defined by claim 4.

Usually, the point-to-multipoint mode corresponds with an idle mode for receiving the point-to-multipoint information via a common channel without dedicated signalling taking place, and as a result the radio network controller is not aware that the terminal is receiving point-to-multipoint information. The point-to-point-mode usually corresponds with a non-idle mode for receiving point-to-point information or combined information under signalling conditions.

A fourth embodiment of the method according to the invention is defined by claim 5.

The further point-to-point information being transmitted from the terminal in the point-to-point-mode to the radio network controller forms, together with the point-to-point information, a part of an audio call and/or a video call etc.

A fifth embodiment of the method according to the invention is defined by claim 6.

The at least one terminal message corresponds with a connection request message generated by the terminal in response to a user action in case of for example a call being started from the terminal or in response to a controller paging message originating from the radio network controller in case of for example the call being started from another terminal via the radio network controller.

A sixth embodiment of the method according to the invention is defined by claim 7.

The controller message comprises radio data for setting up a connection, like for example frequency data, timeslot data, code data etc.

A seventh embodiment of the method according to the invention is defined by claim 8.

The at least one further terminal message comprises radio capability data like for example power data and noise data etc. and an acknowledgement for acknowledging a reception of the controller message.

The invention further relates to terminal for receiving point-to-point information from a radio network controller, which terminal comprises a point-to-point-mode for receiving the point-to-point information from the radio network controller and a point-to-multipoint mode for receiving point-to-multipoint information from the radio network controller, and which terminal comprises
- a transmitter for transmitting a terminal message to the radio network controller; and
- a receiver for receiving a controller message from the radio network controller for bringing the terminal in the point-to-point-mode.

The terminal according to the invention is characterised in that the terminal further comprises
- a generator for generating a mode-indication to be inserted into at least one terminal message for informing the radio network controller that the terminal is in a non-signalling point-to-multipoint mode; and
- the receiver for receiving combined information in the point-to-point-mode from the radio network controller, which combined information comprises the point-to-multipoint information and the point-to-point information.

The invention yet further relates to a radio network controller for transmitting point-to-point information to a terminal, which terminal comprises a point-to-point-mode for receiving the point-to-point information from the radio network controller and a point-to-multipoint mode for receiving point-to-multipoint information from the radio network controller, which radio network controller comprises
- a receiver for receiving a terminal message from the terminal; and
- a transmitter for transmitting a controller message to the terminal for bringing the terminal in the point-to-point-mode.

The radio network controller according to the invention is characterised in that the radio network controller further comprises
- a detector for detecting a mode-indication in at least one terminal message for informing the radio network controller that the terminal is in a non-signalling point-to-multipoint-mode;
- an establisher for establishing a dedicated signalling connection between the radio network controller and the terminal; and
- the transmitter for transmitting combined information comprising the point-to-multipoint information and the point-to-point information to the terminal in the point-to-point-mode.

Embodiments of the terminal according to the invention and of the radio network controller according to the invention correspond with the embodiments of the method according to the invention.

The invention is based upon an insight, inter alia, that a radio network controller, when transmitting point-to-point information to a terminal, may not be aware whether the terminal was receiving point-to-multipoint information at the same time, and is based upon a basic idea, inter alia, that the radio network controller should be informed of this, to allow the combining of both kinds of information and the transmission of the combined information to the terminal in the point-to-point-mode.

The invention solves the problem, inter alia, of providing a method which allows single-coded terminals to receive point-to-point information during and without interrupting (or finishing) a reception of point-to-multipoint information, and is advantageous, inter alia, in that the reception of point-to-multipoint information no longer needs to be interrupted (or finished). The invention can be used for multi-coded terminals as well, and generally increases the efficiency.

These and other aspects of the invention will be apparent from and elucidated with reference to the embodiments(s) described hereinafter.

In the drawings:
Fig. 1 shows in block diagram form a radio network controller according to the invention and a terminal according to the invention;
Fig. 2 shows a timing scheme of a prior art method; and
Fig. 3 shows a timing scheme of a method according to the invention.

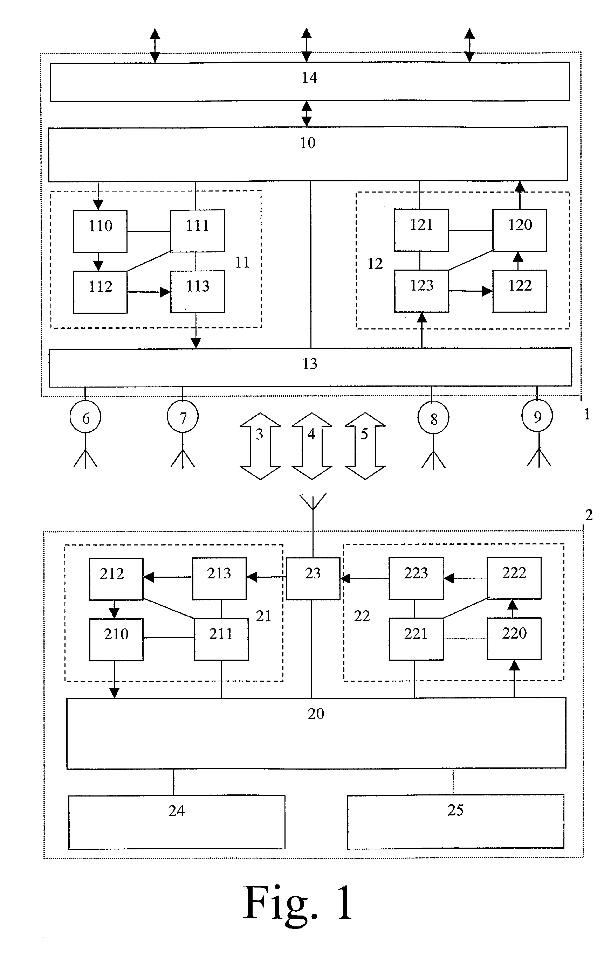

In Fig. 1, the radio network controller 1 (RNC 1) according to the invention comprises a processor system 10 of which a first side is coupled to a transmitting system 11 and to a receiving system 12 and of which a second side is coupled to a switch 14 which is further coupled to a core network not shown. The transmitting system 11 and the receiving system 12 are further coupled to an interface 13, which is further coupled to nodes 6-9, each one for example being a node B (a kind of base station) comprising one or more antennas. Transmitting system 11 comprises a transmitter 112 coupled via an input unit 110 to processor system 10 and via an output unit 113 to interface 13, and comprises a controller 111 coupled to transmitter 112 and to units 110 and 113. Receiving system 12 comprises a receiver 122 coupled via an output unit 120 to processor system 10 and via an input unit 123 to interface 13, and comprises a controller 121 coupled to receiver 122 and to units 120 and 123. Processor system 10 is further coupled to controllers 111 and 121 and to interface 13.

In Fig. 1, the terminal 2 according to the invention comprises a processor system 20 of which a first side is coupled to a transmitting system 22 and to a receiving system 21 and of which a second side is coupled to a man-machine-interface 14 (mmi 14) and to a memory 15. The transmitting system 22 and the receiving system 21 are further coupled to an interface 23, which is further coupled to one or more antennas. Transmitting system 22 comprises a transmitter 222 coupled via an input unit 220 to processor system 20 and via an output unit 223 to interface 23, and comprises a controller 221 coupled to transmitter 222 and to units 220 and 223. Receiving system 21 comprises a receiver 212 coupled via an output unit 210 to processor system 20 and via an input unit 213 to interface 23, and comprises a controller 211 coupled to receiver 212 and to units 220 and 223. Processor system 20 is further coupled to controllers 211 and 221 and to interface 23.

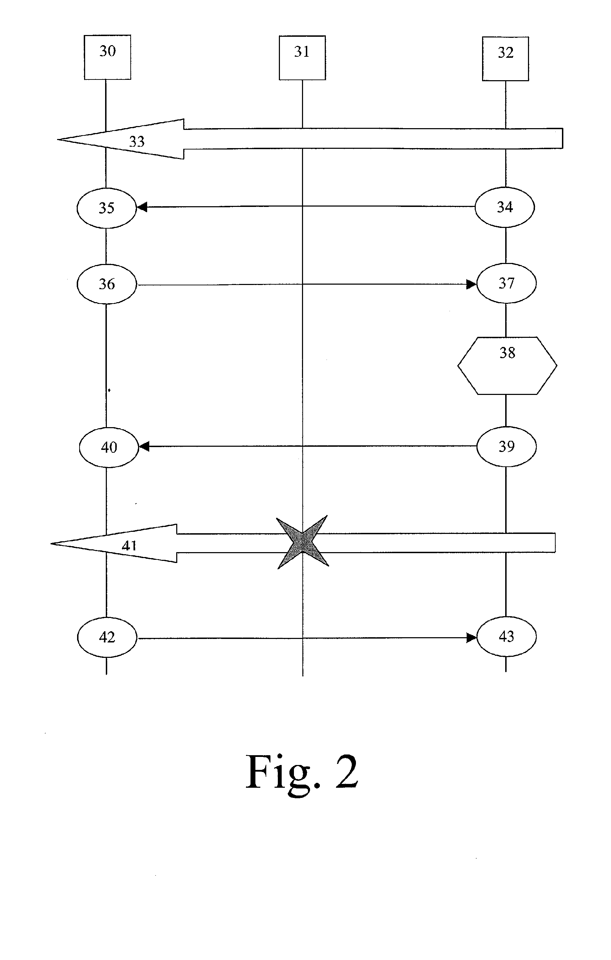

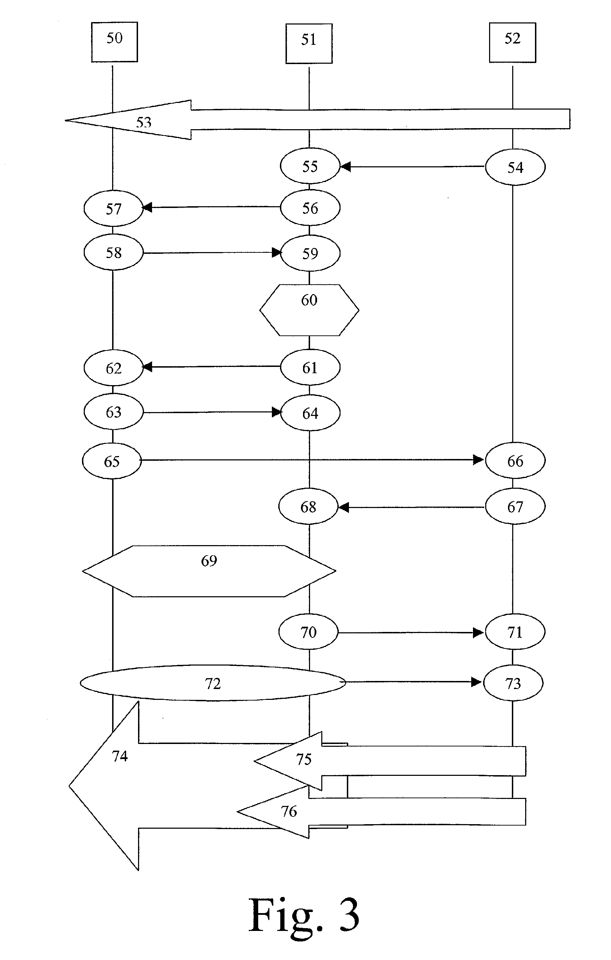

The functioning of RNC 1 and terminal 2 will be explained in view of Fig. 2 and Fig. 3.

In Fig. 2 the timing scheme of a prior art method is shown, in which the following numbers have the following meaning:
Block 30: Terminal 2;
Block 31: Node 7;
Block 32: RNC 1;
Arrow 33: Point-to-multipoint information flowing from RNC 1 to terminal 2;
Block 34: Transmission of a paging request message from RNC 1 to terminal 2;
Block 35: Reception of the paging request message at terminal 2;
Block 36: Transmission of a connection request message from terminal 2 to RNC 1;
Block 37: Reception of the connection request message at RNC 1;
Block 38: RNC 1 decides to use a dedicated channel for the signalling connection;
Block 39: Transmission of a connection set up message from RNC 1 to terminal 2;
Block 40: Reception of the connection set up message at terminal 2;
Arrow 41: Point-to-multipoint information flowing from RNC 1 to terminal 2 is interrupted (or finished);
Block 42: Transmission of a connection set up complete message from terminal 2 to RNC 1;
Block 43: Reception of the connection set up complete message at RNC 1.

The prior art method functions as follows. Point-to-multipoint information (PTM info) for example originating from the core network is flowing from RNC 1 to terminal 2 via node 7 (Arrow 33). Thereto, this PTM info like for example a broadcasted video signal arrives via the core network at switch 14, and flows via processor system 10 and transmitting system 11 and interface 13 to node 7, which transmits the PTM info via a common channel 3 to terminal 2. Thereto, terminal 2 is in a non-signalling point-to-multipoint-mode (non-signalling PTM mode) corresponding with an idle-mode. Via its antenna and interface 23 and receiving system 21, the PTM info arrives at processor system 20 of terminal 2, which processes the PTM info for displaying the PTM info via mmi 14. Then, a request for transmitting point-to-point information (PTP info) to terminal 2 arrives at RNC 1. This PTP info for example corresponds with a call to be made between a requesting terminal not shown and terminal 2. As a result, a paging request message is transmitted from RNC 1 to terminal 2 (Block 34), and terminal 2 receives this paging request message (Block 35). In response, a connection request message is transmitted from terminal 2 to RNC 1 (Block 36), and RNC 1 receives this connection request message (Block 37). RNC 1 decides to use a dedicated channel 4 for this PTP info (Block 38), and transmits a connection set up message to terminal 2 (Block 39). Terminal 2 receives this connection set up message (Block 40), and in response, due to terminal 2 for example being a single-coded terminal, which cannot receive both kinds of information at the same time, in other words which cannot be in the PTM mode and in a point-to-point-mode (PTP mode) at the same time, terminal 2 is brought into the PTP mode (a connected mode). These PTP and PTM modes are for example defined by the codes used for the exchange of PTP and PTM info, like for example the codes used in Code Division Multiple Access Systems etc. In the PTP mode, PTP info is sent to a single user via a dedicated channel. In the PTM mode, the same PTM info is sent to several users at the same time via common channels. So, when being brought into the PTP mode, for example interface 23 interrupts (or finishes) the monitoring of the common channel 3 and starts monitoring the dedicated channel 4. As a result, the PTM info flowing from RNC 1 to terminal 2 is interrupted (or finished) (Arrow 41). Then a connection set up complete message is transmitted from terminal 2 to RNC 1 (Block 42), and is received by RNC 1 (Block 43). Finally, the PTP info can be transmitted from RNC 1 to terminal 2 via the dedicated channel 4, and in case of the PTP info forming part of a bidirectional call, further PTP info can flow via dedicated channel 4 or another channel from terminal 2 to RNC 1 etc. Summarising, according to this prior art method, the PTP info can only be transmitted through interrupting (or finishing) the PTM info.

In Fig. 3 the timing scheme of a method according to the invention is shown, in which the following numbers have the following meaning:
Block 50: Terminal 2;
Block 51: RNC 1;
Block 52: core network;
Arrow 53: Point-to-multipoint information flowing from the core network to terminal 2 via RNC 1;
Block 54: Transmission of a core network paging request message from the core network to RNC 1;
Block 55: Reception of the core network paging request message at RNC 1;
Block 56: Transmission of a controller paging request message from RNC 1 to terminal 2;
Block 57: Reception of the controller paging request message at terminal 2;
Block 58: Transmission of a connection request message from terminal 2 to RNC 1;
Block 59: Reception of the connection request message at RNC 1;
Block 60: RNC 1 decides to use a forward access channel or a random access channel;
Block 61: Transmission of a connection set up message from RNC 1 to terminal 2;
Block 62: Reception of the connection set up message at terminal 2;
Block 63: Transmission of a connection set up complete message from terminal 2 to RNC 1;
Block 64: Reception of the connection set up complete message at RNC 1.
Block 65: Transmission of an initial direct transfer message from terminal 2 to the core network;
Block 66: Reception of the initial direct transfer message at the core network;
Block 67: Transmission of an assignment request message from the core network to RNC 1;
Block 68: Reception of the assignment request message at RNC 1;
Block 69: A dedicated connection is established between terminal 2 and RNC 1;
Block 70: Transmission of an assignment response message from RNC 1 to the core network;
Block 71: Reception of the assignment response message at the core network;
Block 72: Transmission of confirmation message from terminal 2 or RNC 1 to the core network to indicate that terminal 2 is in the point-to-point-mode as well as the service it is receiving;
Block 73: Reception of the confirmation message at the core network;
Arrow 74: Combined information flowing from RNC 1 to terminal 2, which combined information comprises the point-to-multipoint info 76 and point-to-point info 75;
Arrow 75: Point-to-point information flowing from the core network to RNC 1;
Arrow 76: Point-to-multipoint information flowing from the core network to RNC 1.

The method according to the invention functions as follows. Point-to-multipoint information (PTM info) originating from the core network is flowing from the core network to terminal 2 via RNC 1 (Arrow 53). Thereto, this PTM info like for example a broadcasted video signal arrives via the core network at switch 14, and flows via processor system 10 and transmitting system 11 and interface 13 to for example node 7, which transmits the PTM info via a common channel 3 to terminal 2. Thereto, terminal 2 is in a non-signalling PTM mode. Via its antenna and interface 23 and receiving system 21, the PTM info arrives at processor system 20 of terminal 2, which processes the PTM info for displaying the PTM info via mmi 14. Then, a request for transmitting point-to-point information (PTP info) to terminal 2 arrives at the core network. This PTP info for example corresponds with a call to be made between a requesting terminal not shown and terminal 2. As a result, a core network paging request message is transmitted from the core network to RNC 1 (Block 54), and RNC 1 receives this core network paging request message (Block 55). A controller paging request message is transmitted from RNC 1 to terminal 2 (Block 56), and the controller paging request message is received at terminal 2 (Block 57). In response, a connection request message is transmitted from terminal 2 to RNC 1 (Block 58), and RNC 1 receives this connection request message (Block 59). Due to this connection request message comprising a mode-indication for informing RNC 1 that terminal 2 is in the non-signalling PTM mode corresponding with receiving data in an idle-mode, RNC 1 now decides to use a common channel for example a forward or random access channel 5 (Block 60), and transmits a connection set up message to terminal 2 (Block 61), which is received by terminal 2 (Block 62). In response, terminal 2 is brought into the point-to-point-mode (PTP mode). A connection set up complete message is transmitted from terminal 2 to RNC 1 (Block 63), and is received by RNC 1 (Block 64). An initial direct transfer message is transmitted from terminal 2 to the core network (Block 65), and is received by the core network (Block 66). An assignment request message is transmitted from the core network to RNC 1 (Block 67), and is received by RNC 1 (Block 68). A dedicated connection is established between terminal 2 and RNC 1 (Block 69), and an assignment response message is transmitted from RNC 1 to the core network (Block 70), and is received by the core network (Block 71). A confirmation message is transmitted from terminal 2 or RNC 1 to the core network (Block 72) to indicate that terminal 2 is in the point-to-point-mode as well as the service it is receiving, and is received by the core network (Block 73). Finally, combined information 74 is flowing from RNC 1 to terminal 2, which combined information 74 comprises the point-to-multipoint info 76 and point-to-point info 75 (Arrow 74,75,76). This combining of information has become possible due to RNC 1 being informed via the mode-indication that terminal 2 is already receiving PTM info.

The connection request message 58,59 (terminal message) preferably comprises an identifier for identifying the point-to-multipoint information 33,53,76.

A common channel 3 is used for transmitting the PTM info 33,53 in the prior art situation from the RNC 1 to the terminal 2; a dedicated channel 4 is used for transmitting the PTP info 75 in the prior art situation from the RNC 1 to the terminal 2; and one and the same channel 5 is used for transmitting the combined information 74 from the RNC 1 to the terminal 2. This one and the same channel 5 may be a common channel like a forward or random access channel or may be a dedicated channel, as long as it is possible to send the combined information 74 via this channel 5.

The non-signalling PTM mode corresponds with an idle mode for receiving the PTM info 33,53 via a common channel 3 without dedicated signalling taking place, with the PTP mode corresponding with a non-idle mode for receiving PTP info 75 or combined information 74 under signalling conditions.

The connection set up message 39,40,61,62 (controller message) comprises radio data for setting up a connection. At least one connection set up complete message 42,43,63,64 (further terminal message) comprises radio capability data and an acknowledgement for acknowledging a reception of the connection set up message 39,40,61,62.

The terminal 2 comprises
- a transmitter 222 for transmitting a terminal message 36,37,58,59 to the radio network controller 1; and
- a receiver 212 for receiving a controller message 39,40,61,62 from the radio network controller 1 for bringing the terminal 2 in the PTP mode;
and further comprises
- a generator 221 for generating a mode-indication to be inserted into at least one terminal message 36,37,58,59 for informing the radio network controller 1 that the terminal 2 is in the PTM mode while in the idle-mode; and
- the receiver 212 for receiving combined information 74 in the PTP mode from the radio network controller 1, which combined information 74 comprises the PTM info 33,53 and the PTP info 75.
Thereto, generator 221 for example forms part of a controller 221 having a generator function. Alternatively, the generator function may be implemented in processor system 20.

RNC 1 comprises
- a receiver 122 for receiving a terminal message 36,37,58,59 from the terminal 2; and
- a transmitter 112 for transmitting a controller message 39,40,61,62 to the terminal 2 for bringing the terminal 2 in the PTP mode; and further comprises
- a detector 121 for detecting a mode-indication in at least one terminal message 36,37,58,59 for informing the radio network controller 1 that the terminal 2 is in the non-signalling PTM mode corresponding with the idle mode;
- an establisher 111 for establishing a dedicated signalling connection between the radio network controller 1 and the terminal 2; and
- the transmitter 112 for transmitting combined information 74 comprising the PTM info 33,53 and the PTP info 75 to the terminal 2 in the PTP mode.
Thereto, detector 121 for example forms part of a controller 121 having a detection function. Alternatively, the detection function may be implemented in processor system 10. And thereto, establisher 111 for example forms part of a controller 111 having an establishing function. Alternatively, the establishing function may be implemented in processor system 10. Of course, the establishing of the dedicated signalling connection may be done through exchanging messages via the transmitter 112 and/or the receiver 122. Further, controller 111 may have a combiner function for combining the PTM info 33,53 and the PTP info 75 into the combined information 74. Alternatively, the combiner function may be implemented in processor system 10. This combining may otherwise already be done in the core network. The combining for example corresponds with multiplexing, with terminal 2 comprising a decombiner function for example corresponding with demultiplexing to be realised via for example controller 211 or implemented in processor system 20.

The expression "for" in for example "for transmitting", "for receiving", "for bringing", "for informing" etc. does not exclude that other functions are performed as well, simultaneously or not. The expressions "X coupled to Y" and "a coupling between X and Y" and "coupling/couples X and Y" etc. do not exclude that an element Z is in between X and Y. The expressions "P comprises Q" and "P comprising Q" etc. do not exclude that an element R is comprises/included as well. The terms "a" and "an" do not exclude the possible presence of one or more pluralities.

The steps of transmitting, combining and using etc. do not exclude further steps, like for example shown in and described for Fig. 3 etc.

The invention is based upon an insight, inter alia, that a radio network controller, when transmitting point-to-point information to a terminal, may not be aware whether the terminal was receiving point-to-multipoint information at the same time, and is based upon a basic idea, inter alia, that the radio network controller should be informed of this, to allow the combining of both kinds of information and the transmission of the combined information to the terminal in the point-to-point-mode.

The invention solves the problem, inter alia, of providing a method which allows single-coded terminals to receive point-to-point information during and without interrupting (or finishing) a reception of point-to-multipoint information, and is advantageous, inter alia, in that the reception of point-to-multipoint information no longer needs to be interrupted (or finished). The invention can be used for multi-coded terminals as well, and generally increases the efficiency.

## Claims

1. Method for transmitting point-to-point information (75) from a radio network controller (1) to a terminal (2), which terminal (2) comprises a point-to-point-mode for receiving the point-to-point information (75) from the radio network controller (1) and a point-to-multipoint for receiving point-to-multipoint information (33,53,76) from the radio network controller (1), which method comprises the steps of
- transmitting a terminal message (36,37,58,59) from the terminal (2) to the radio network controller (1); and
- transmitting a controller message (39,40,61,62) from the radio network controller (1) to the terminal (2) for bringing the terminal (2) in the point-to-point-mode;
**characterised in that** at least one terminal message (58,59) comprises a mode-indication for informing the radio network controller (1) that the terminal (2) is in a non-signalling point-to-multipoint-mode, with the method further comprising the steps of
- establishing a dedicated signalling connection between the radio network controller (1) and the terminal (2); and
- combining the point-to-multipoint information (33,53,76) and the point-to-point information (75) and sending the combined information (74) to the terminal (2) in the point-to-point-mode.

2. Method according to claim 1, **characterised in that** at least one terminal message (58,59) comprises an identifier for identifying the point-to-multipoint information (33,53,76).

3. Method according to claim 1, **characterised in that** the method comprises the steps of
- using a common channel (3) for transmitting the point-to-multipoint information (33,53,76) from the radio network controller (1) to the terminal (2);
- using a dedicated channel (4) for transmitting the point-to-point information (75) from the radio network controller (1) to the terminal (2); and
- using one and the same channel (5) for transmitting the combined information (74) from the radio network controller (1) to the terminal (2).

4. Method according to claim 1, **characterised in that** the non-signalling point-to-multipoint corresponds with an idle mode for receiving the point-to-multipoint information (33,53,76) via a common channel without signalling taking place, with the point-to-point-mode corresponding with a non-idle mode for receiving point-to-point information (75) or combined information (74) under signalling conditions.

5. Method according to claim 1, **characterised in that** further point-to-point information (75) is transmitted from the terminal (2) in the point-to-point-mode to the radio network controller (1).

6. Method according to claim 1, **characterised in that** the at least one terminal message (58,59) corresponds with a connection request message generated by the terminal (2) in response to either a user action or a controller paging message (56,57) originating from the radio network controller (1).

7. Method according to claim 6, **characterised in that** the controller message (39,40,61,62) comprises radio data for setting up a connection.

8. Method according to claim 7, **characterised in that** at least one further terminal message (42,43,63,64) comprises radio capability data and an acknowledgement for acknowledging a reception of the controller message (39,40,61,62).

9. Terminal (2) for receiving point-to-point information (75) from a radio network controller (1), which terminal (2) comprises a point-to-point-mode for receiving the point-to-point information (75) from the radio network controller (1) and a point-to-multipoint mode for receiving point-to-multipoint information (33,53,76) from the radio network controller (1), and which terminal (2) comprises
- a transmitter (222) for transmitting a terminal message (36,37,58,59) to the radio network controller (1); and
- a receiver (212) for receiving a controller message (39,40,61,62) from the radio network controller (1) for bringing the terminal (2) in the point-to-point-mode;
**characterised in that** the terminal (2) further comprises
- a generator (221) for generating a mode-indication to be inserted into at least one terminal message (58,59) for informing the radio network controller (1) that the terminal (2) is in a non-signalling point-to-multipoint mode; and
- the receiver (212) for receiving combined information (74) in the point-to-point-mode from the radio network controller (1), which combined information (74) comprises the point-to-multipoint information (33,53,76) and the point-to-point information (75).

10. Radio network controller (1) for transmitting point-to-point information (75) to a terminal (2), which terminal (2) comprises a point-to-point-mode for receiving the point-to-point information (75) from the radio network controller (1) and a point-to-multipoint mode for receiving point-to-multipoint information (33,53,76) from the radio network controller (1), which radio network controller (1) comprises
- a receiver (122) for receiving a terminal message (36,37,58,59) from the terminal (2); and
- a transmitter (112) for transmitting a controller message (39,40,61,62) to the terminal (2) for bringing the terminal (2) in the point-to-point-mode;
**characterised in that** the radio network controller (1) further comprises
- a detector (121) for detecting a mode-indication in at least one terminal message (58,59) for informing the radio network controller (1) that the terminal (2) is in a non-signalling point-to-multipoint mode;
- an establisher (111) for establishing a dedicated signalling connection between the radio network controller (1) and the terminal (2); and
- the transmitter (112) for transmitting combined information (74) comprising the point-to-multipoint information (33,53,76) and the point-to-point information (75) to the terminal (2) in the point-to-point-mode.
